# EUROPÄISCHE PATENTANMELDUNG

(11) **EP 1 209 926 A2**
(43) Veröffentlichungstag der Anmeldung: **29.05.2002**
(21) Anmeldenummer: 01000635.1
(22) Anmeldetag: 16.11.2001
(51) Int. Cl.: H04Q 3/68

(54) **Paketvermittlungseinrichtung mit einer Kaskadensteuerung und pufferloser Kaskadenkoppelmatrix**

(30) Priorität: 18.11.2000 DE 10057343
(71) Anmelder: Philips Corporate Intellectual Property GmbH, 52064 Aachen (DE); Koninklijke Philips Electronics N.V., 5621 BA Eindhoven (NL)
(72) Erfinder: van Wageningen, Andries, 52064, Aachen (DE); Reumermann, Hans-Jürgen, 52064, Aachen (DE); Lelkens, Armand, Aachen, 52064 (DE)
(74) Vertreter: Volmer, Georg, Dipl.-Ing.

(57) **Zusammenfassung**

Die Erfindung bezieht sich auf eine Paketvermittlungseinrichtung mit einem Koppelfeld bestehend aus mehreren pufferlosen Koppelmatrizen (6) und mehreren zu einer Kaskade geschalteten, jeweils einer Koppelmatrix (6) zugeordneten Vermittlungssteuerungen (7), die jeweils mindestens
- einen Kennzeichnungs-Analysator (12) zur Kennzeichnung des Eingangsports in einer einen Paket zugeordneter Routekennzeichnung,
- einen Augangszuteiler (13) zur Auswertung der Routekennzeichnung,
- einer Konfigurationseinheit (14) zur Speicherung von akzeptierten Zuordnungen jeweils eines Eingangsports mit einem Ausgangsport,
- einem Kennzeichnungserteilungs-Analysator (15) zur Veränderung und Weiterleitung der Routekennzeichnung an eine Portsteuerung (2 bis 5),
enthalten.

## Beschreibung

Die Erfindung bezieht sich auf eine Paketvermittlungseinrichtung mit einem Koppelfeld.

In der Veröffentlichung "Weighted Arbitration Algorithms with Priorities for Input-Queued Switches with 100% Throughput" von R. Schoenen, G. Post, G. Sander, Broadband Switching Symposium '99, werden verschiedene, gewichtete Vermittlungsalgorithmen einer Paketvermittlungseinrichtung verglichen. Die Vermittlungsalgorithmen versuchen mit unterschiedlichen Vermittlungsschritten eine Kollision mehrerer für den selben Ausgangsport der Paketvermittlungseinrichtung bestimmter Pakete zu verhindern und daraus resultierenden Datenverlust oder Verzögerung zu reduzieren.

Der Erfindung liegt die Aufgabe zugrunde, eine kollisionsfreie Vermittlung von Daten in Form von Paketen zu gewährleisten.

Die Aufgabe wird durch eine Paketvermittlungseinrichtung mit einem Koppelfeld bestehend aus mehreren pufferlosen Koppelmatrizen und mehreren zu einer Kaskade geschalteten, jeweils einer Koppelmatrix zugeordneten Vermittlungssteuerungen gelöst, die jeweils mindestens
- einen Kennzeichnungs-Analysator zur Kennzeichnung des Eingangsports in einer einen Paket zugeordneter Routekennzeichnung,
- einen Ausgangszuteilen zur Auswertung der Routekennzeichnung,
- einer Konfigurationseinheit zur Speicherung von akzeptierten Zuordnungen jeweils eines Eingangsports mit einem Ausgangsport,
- einem Kennzeichnungserteilungs-Analysator zur Veränderung und Weiterleitung der Routekennzeichnung an eine Portsteuerung
enthalten.

Eine Paketvermittlungseinrichtung vermittelt die als Pakete am Eingangsport empfangene Signalisierungs- und Nutzdaten zu dem entsprechenden Ausgangsport.

Bei der Generierung einer Routekennzeichnung zur Steuerung des Pakets durch die Paketvermittlungseinrichtung bedient sich eine für den Eingangsport zuständige Portsteuerung einer Tabelle, in der die für die Routekennzeichnung notwendigen Leitweg- und Prioritätsinformationen enthalten sind. Die Leitweg- und Prioritätsinformationen geben den Ziel-Ausgang der Paketvermittlungseinrichtung und eine Gewichtung der Anfrage an. Eine Gewichtung kann Angaben über die Priorität und Klasse der Pakete bzw. die Wartzeit oder Größe einer Warteschlange beinhalten.

Die Paketvermittlungseinrichtung besteht aus mehreren zu einer Kaskade geschalteten pufferlosen Koppelmatrizen zur Verknüpfung von Eingangsports und Ausgangsports, mehreren zu einer Kaskade geschalteten Vermittlungssteuerungen zur Initialisierung und Veränderung der Konfiguration der Koppelmatrizen und einigen nach dem FIFO-Verfahren (First In First Out) arbeitenden Register in Form von logischen Warteschlangen.

Die Schnittstelle zwischen der Portsteuerung und der Paketvermittlungseinrichtung kann entweder aus zwei separaten Leitungen für Signalisierungs- und Nutzdaten bestehen, oder ein Teil der Portsteuerung ist in der Paketvermittlungseinrichtung integriert und die Signalisierungs- und Nutzdaten werden gemeinsamen über eine Leitung gemultiplext übertragen ("in-band control").

Bei der Verwendung einer pufferlosen Koppelmatrix führt eine Kollision mehrerer für den selben Ausgangsport bestimmter Pakete zu einen Verlust von Paketen. Um den Verlust zu verhindern, werden die Pakete in Warteschlangen innerhalb der Portsteuerung zwischengespeichert. Da Zellen konstanter Länge bei der Vermittlung leichter zu handhaben sind als Pakete wechselnder Größe, werden die ankommenden Pakete in Zellen konstanter Länge zerteilt. Nach einer erfolgreichen Vermittlung, d.h. akzeptierte Zuordnung jeweils eines Eingangsports mit einem Ausgangsport, werden die Zellen aus der Warteschlange entfernt.

Eine Zelle kann entweder gleichzeitig mit der Routekennzeichnung an die Paketvermittlungseinrichtung verschickt werden oder die Zelle wird separat an die Paketvermittlungseinrichtung befördert, nachdem die Routekennzeichnung mit einer Anfrage einige Zeit zuvor an der Paketvermittlungseinrichtung angekommen ist und diese ihre Vorbereitung zum Transfer der Zelle vorgenommen hat.

Die gleichzeitige Versendung von Routekennzeichnung und Zelle wird als "Selfrouting" bezeichnet. Sie hat den Nachteil, dass in der Portsteuerung entschieden wird, welche Zelle vermittelt wird und dadurch eine Kollision der Zellen nicht vermieden werden kann. Durch eine getrennte Versendung der Routekennzeichnung und der Zelle kann der Verlust aufgrund einer Kollision der Zellen nicht wesentlich vermindert werden.
Eine weitere Möglichkeit besteht darin, die Routekennzeichnung mit mehreren Anfragen an die Paketvermittlungseinrichtung zu leiten und diese entscheidet welche der Anfragen akzeptiert wird, um dann die Vorbereitung zum Transfer der ausgewählten Zelle vorzunehmen. Diese Möglichkeit bietet eine fast verlustlose Vermittlung der Zellen.

Um die Kapazität der Paketvermittlungseinrichtung zu erhöhen, werden mehrere Koppelmatrizen parallel betrieben und gleichzeitig in Reihe geschaltet, so dass eine Kaskadierung der einzelnen Koppelmatrix entsteht. Die zur einer Kaskade geschalteten Koppelmatrizen werden einzeln durch jeweils eine Vermittlungssteuerung gesteuert und bilden gemeinsam eine entsprechend größere Koppelmatrix.

Zum Konfigurieren der großen Koppelmatrix wird ein auf die Vermittlungssteuerungen verteilter Algorithmus verwendet. Da sich jede Vermittlungssteuerung eines Algorithmus bedient um die zugehörige Koppelmatrix zu konfigurieren, kann durch die Kaskadierung der Ergebnisse eine globale Entscheidung der Paketvermittlungseinrichtung erzielt werden.

Die aus der Portsteuerung kommende Routekennzeichnung wird mit einer Anfrage an alle (sich in einer Reihe der Kaskade befindenden) Vermittlungssteuerungen geführt. Das Signal wird von jeder Vermittlungssteuerung zur nächsten Vermittlungssteuerung weitergeleitet und in jeder Vermittlungssteuerung wiederaufgefrischt. Die in einer Spalte der Kaskade liegenden Vermittlungssteuerungen sind jeweils für einen Ausgangsport zuständig. Jede der (in einer Spalte) kaskadierten Vermittlungssteuerungen entscheidet aufgrund der Gewichtung zwischen dem lokal in der Vermittlungssteuerung erzieltem Ergebnis und dem Ergebnis kommend von dem (in der gleichen Spalte liegenden) Vorgänger. Die Entscheidung wird dem (in der gleichen Spalte liegenden) Nachfolger mitgeteilt.

Die Ergebnisse der in der untersten Reihe einer Kaskade liegenden Vermittlungssteuerungen sind die resultierenden Vermittlungen für die Ausgangsports. Da die Vermittlungssteuerungen sich für einen Ausgang entscheiden, können für einen Eingangsport mehrere unterschiedliche Ergebnisse sich ergeben. Um eine Entscheidung für die Eingangsports durchzuführen, werden die Ergebnisse wieder an die Vermittlungssteuerungen zurückgeführt.

Die Entscheidung für die Eingangsports wird auf ähnliche Weise durchgeführt wie die Entscheidung für die Ausgangsports. Die Ergebnisse der in der untersten Reihe einer Kaskade liegenden Vermittlungssteuerungen sind dann die resultierenden Vermittlungen für die Eingangsports. Diese Ergebnisse, die eine Teilmenge der Ergebnisse für die Ausgangsports sind, sind gleichzeitig auch die resultierenden Vermittlungen für die Koppelmatrix. Um das Resultat zu verbessern, kann der zuvor beschriebene Vorgang für die noch nicht vermittelte Eingänge iterativ wiederholt werden.

Ein Ausführungsbeispiel der Erfindung wird nachstehend anhand der Figuren näher erläutert.

Es zeigen:
- Fig. 1: eine Darstellung einer Paketvermittlungseinrichtung mit separaten Eingängen der Signalisierungs- und Nutzdaten,
- Fig. 2: eine Darstellung einer Paketvermittlungseinrichtung mit Eingängen für gemeinsam gemultiplexten Signalisierungs- und Nutzdaten ("in-band control"),
- Fig. 3: prinzipielle Darstellung einer Vermittlung von Zellen anhand gemeinsam oder separat verschickten Routekennzeichnungen innerhalb einer Paketvermittlungseinrichtung,
- Fig. 4: prinzipielle Darstellung einer Vermittlung anhand mehrerer gleichzeitig empfangener Routekennzeichnungsanfragen innerhalb einer Paketvermittlungseinrichtung,
- Fig. 5: prinzipielle Darstellung mehrerer iterativ ermittelter Vermittlungen anhand mehrerer gleichzeitig empfangener Routekennzeichnungsanfragen innerhalb einer Paketvermittlungseinrichtung,
- Fig. 6: prinzipielle Darstellung einer durch mehrere zu einer Kaskade geschalteten Vermittlungssteuerungen iterativ ermittelter Vermittlung und
- Fig. 7: eine große Koppelmartix bestehend aus einer Kaskadenschaltung mehrerer Koppelmatrizen mit mehreren zu einer Kaskade geschalteten Vermittlungssteuerungen.

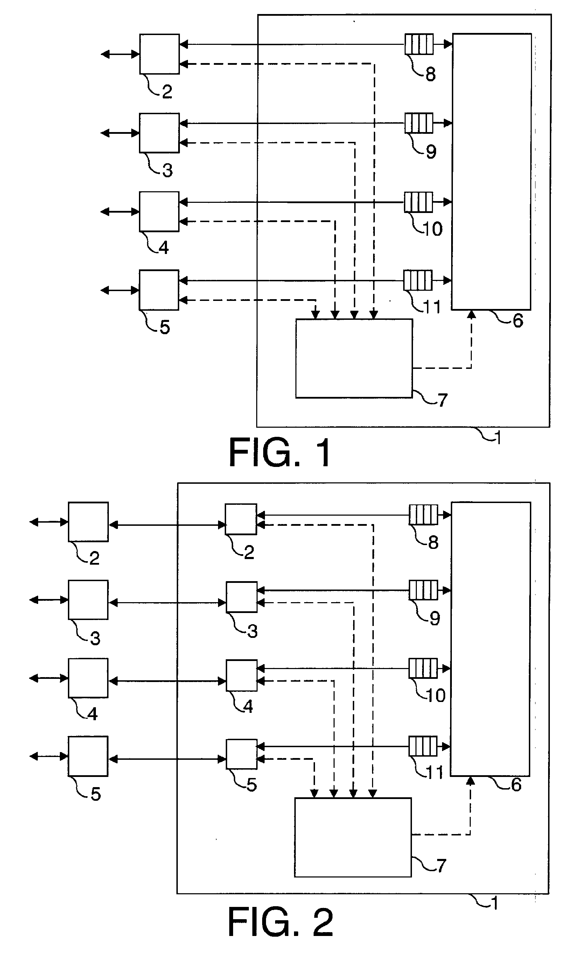

Die in der Fig. 1 dargestellte Paketvermittlungseinrichtung 1 für den Datentransport von Paketen, verbindet eine bestimmte Anzahl von Eingangsports mit den entsprechenden Ausgangsports. Für die an den Eingangsport ankommende Pakete werden jeweils durch eine Portsteuerung 2 bis 5 anhand von Vermittlungs-Tabellen Informationen wie z.B. eine Route und eine Priorität ermittelt. Der nächste Schritt bei der Vermittlung der in Zellen zerteilter Pakete besteht darin, diese zu der zuvor bestimmten Ausgangsleitung der Paketvermittlungseinrichtung 1 zu befördern. Die dafür vorgesehenen Vermittlungsschritte werden im folgenden erläutert.

Die Paketvermittlungseinrichtung 1 besteht aus einer Koppelmatrix 6, einer Vermittlungssteuerung 7 und einigen nach dem FIFO-Verfahren (First In First Out) arbeitenden Register 8 bis 11 in Form von logischen Warteschlangen.

Eine alternative Darstellung der Paketvermittlungseinrichtung 1 wird durch die Fig 2 näher beschrieben. Abweichend zu der in Fig 1 dargestellten Paketvermittlungseinrichtung 1 wird die Portsteuerung 2 bis 5 in zwei Teile aufgegliedert, wobei ein Teil der Portsteuerung 2 bis 5 jeweils in die Paketvermittlungseinrichtung integriert ist (für "in -band control"). Resultierend entstehen an der Schnittstelle zwischen dem ersten Teil der Portsteuerung 2 bis 5 und der Paketvermittlungseinrichtung 1 keine separaten Verbindungen der Signalisierungs- und Nutzdaten, sondern eine Verbindung, auf der die Signalisierungs- und Nutzdaten gemeinsam zu der Paketvermittlungseinrichtung 1 gemultiplext und übertragen werden.

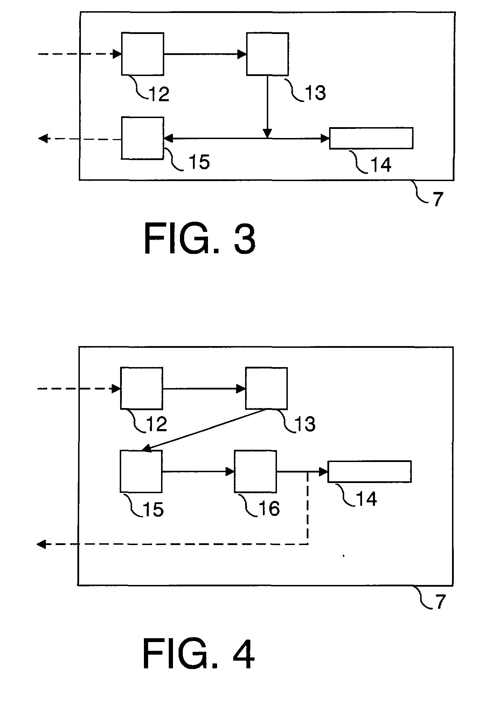

Die Funktion der in Fig. 1 und 2 dargestellten Paketvermittlungseinrichtung 1 wird mit Hilfe der in Fig. 3 bis 5 gezeigten Diagramme näher erläutert.

Um Zellen weiterzuleiten, generiert die Portsteuerung 2 bis 5 eine Routekennzeichnung mit Informationen zum Ziel-Ausgang der Paketvermittlungseinrichtung und Gewichtung der Anfrage. Eine Gewichtung kann Angaben über die Priorität und Klasse der Pakete bzw. die Wartzeit oder Größe einer Warteschlange beinhalten.

Im folgenden wird die Funktion der Paketvermittlungseinrichtung bei einer gemeinsamen Versendung der Routekennzeichnung und der Zelle beschrieben. Die Portsteuerung 2 bis 5 leitet die Zelle gleichzeitig mit der Routekennzeichnung an die Paketvermittlungseinrichtung 1. Innerhalb der Paketvermittlungseinrichtung wird die Routekennzeichnung zu der Vermittlungssteuerung 7 weitergeleitet und die zugehörige Zelle zu der Koppelmatrix, bei der es in nach den FIFO-Verfahren (First In First Out) arbeitendes Register 8 bis 11 eingefügt wird.

Die in Fig.3 dargestellte Vermittlungssteuerung 7 beinhaltet einen Kennzeichnungs-Analysator 12, welcher die Ziel-Ausgangsnummer durch eine Eingangsnummer ersetzt, so dass der Ursprungseingang der Anfrage zurück verfolgt werden kann. Die veränderte Routekennzeichnung wird anschließend zu einem zuständigen Ausgangszuteiler 13 weitergeleitet.

Für jeden Ausgangsport ist ein einzelner Ausgangszuteiler 13 zuständig, der alle vom Kennzeichnungs-Analysator 12 kommenden Anfragen bearbeitet. Aufgrund der Routekennzeichnung entscheidet der Ausgangszuteiler 13 welche der Anfragen akzeptiert wird. Daraufhin wird die Routekennzeichnung zu einer Konfigurationseinheit 14 und einem Kennzeichnungserteilungs-Analysator 15 verschickt.

Die Konfigurationseinheit 14 sammelt die erteilten Routekennzeichnungen der Ausgangszuteiler 13 und schickt sie zu den Konfigurationsregistern innerhalb der Koppelmatrix 6.

Die Aufgabe des Kennzeichnungserteilungs-Analysators 15 besteht darin, die Eingangsnummer durch die Ziel-Ausgangsnummer zu ersetzten und die veränderte Routekennzeichnung an die anfragende Portsteuerung 2 bis 5 weiterzuleiten.

Nachdem die anfragende Portsteuerung 2 bis 5 die veränderte Routekennzeichnung erhalten hat, wird die der Routekennzeichnung zugehörige Zelle aus der Warteschlange entfernt und die Koppelmatrix 6 entsprechend konfiguriert.

Die Vermittlung der Zelle bei einer separaten Versendung von Routekennzeichnung und Zelle wird ebenfalls mit Hilfe der Fig. 3 geschildert.

Im Unterschied zu den zuvor beschriebenen Vermittlungsschritten leitet die Portsteuerung 2 bis 5 in diesem Fall nur die entsprechende Routekennzeichnung an die Vermittlungssteuerung 7 und die zugehörige Zelle verbleibt in der Portsteuerung 2 bis 5. Analog zu den oben beschriebenen Verarbeitungsschritten wird die Routekennzeichnung durch den Kennzeichnungsanalysator 12, den Ausgangszuteiler 13, Konfigurationseinheit 14 und den Kennzeichnungserteilungs-Analysator 15 verändert. Nachdem die anfragende Portsteuerung 2 bis 5 die veränderte Routekennzeichnung erhalten hat, wird zu diesem Zeitpunkt erst die Zelle an die Koppelmatrix 6 verschickt und anschließend aus der Warteschlange entfernt.

Anhand der Fig. 4 wird die Verarbeitung mehrerer Vermittlungsanfragen gleichzeitig innerhalb einer Vermittlung der Vermittlungssteuerung 7 erläutert.

Die Portsteuerung 2 bis 5 generiert die Routekennzeichnung, welche alle Ziel-Ausgangnummern der Paketvermittlungseinrichtung mehrere Anfragen und ihre Gewichtungen enthält.

Diese Routekennzeichnung wird weiter an die Vermittlungsteuerung 7 geleitet, wobei die Zelle der Portsteuerung 2 bis 5 verbleiben und zu einem späteren Zeitpunkt vermittelt werden.

Innerhalb der Vermittlungssteuerung 7 trifft die Routenkennzeichnung an den Kennzeichnungs-Analysator 12, welcher die Ziel-Ausgangsnummern durch Eingangsnummern ersetzt, so dass der Ursprungseingang der Anfragen zurückverfolgt werden kann. Jeder veränderte Teil der Routekennzeichnung wird anschließend zu dem zuständigen Ausgangszuteiler 13 weitergeleitet.

Für jeden Ausgangsport ist ein einzelner Ausgangszuteiler 13 zuständig, der alle vom Kennzeichnungs-Analysator 12 kommenden Anfragen bearbeitet. Aufgrund der Gewichtung der Routekennzeichnung entscheidet der Ausgangszuteiler 13 welche der Anfragen akzeptiert wird. Die ausgewählte Routekennzeichnung wird zum Kennzeichnungserteilung-Analysator 15 weitergeleitet.

Der Kennzeichnungserteilungs-Analysator 15 ersetzt die Eingangsnummer durch die Ziel-Ausgangsnummer und übergibt die veränderte Routekennzeichnung einem zuständigen Eingangszuteiler 16.

Für jeden Eingangsport ist ein einzelner Eingangszuteiler 16 zuständig, der alle vom Kennzeichnungs-Analysator 15 kommenden Zuordnungen bearbeitet. Aufgrund der Gewichtung der Routekennzeichnung entscheidet der Eingangszuteiler 16 welche der Zuordnung akzeptiert wird. Die gewählte Zuordnung wird der Konfigurationseinheit 14 und der anfragenden Portsteuerung 2 bis 5 mitgeteilt.

In der Konfigurationseinheit 14 werden die erteilten Routekennzeichnungen der Eingangszuteiler zusammen getragen, bevor die Konfigurationseinheit 14 sie zu den Konfigurationsregistern innerhalb der Koppelmatrix 6 verschickt. Im nächsten Schritt wird die Koppelmatrix 6 entsprechend neu konfiguriert, um die Zellen zu übertragen.

Nachdem die anfragende Portsteuerung 2 bis 5 die veränderte Routekennzeichnung erhalten hat, werden zu diesem Zeitpunkt erst die Zellen an die Koppelmatrix 6 verschickt und anschließend aus der Warteschlange entfernt.

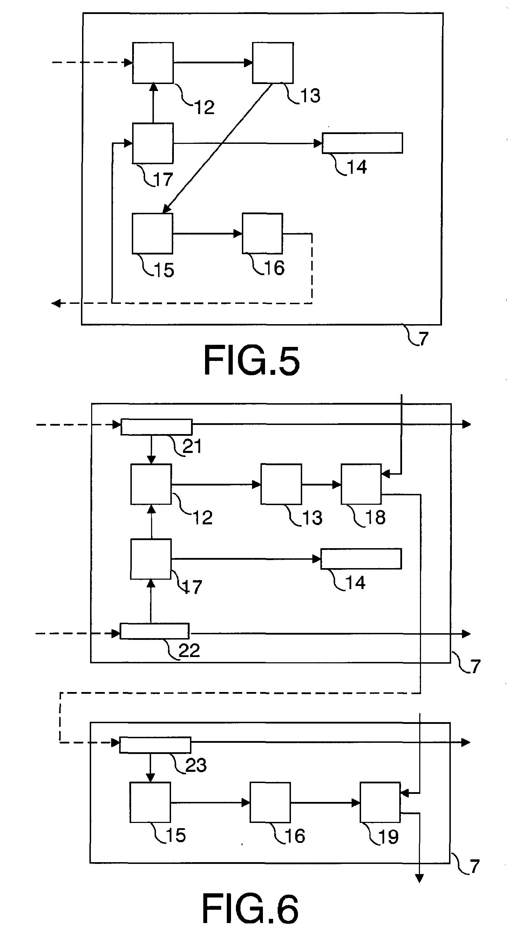

Anhand der Fig. 5 wird die Verarbeitung mehrerer Vermittlungsanfragen gleichzeitig während mehrerer iterativer Vermittlungsschritte der Vermittlungssteuerung 7 erläutert.

Die Portsteuerung 2 bis 5 generiert die Routekennzeichnung, welche alle Ziel-Ausgangnummern der Paketvermittlungseinrichtung mehrerer Anfragen und ihre Gewichtungen enthält.

Diese Routekennzeichnung wird weiter an die Vermittlungsteuerung 7 geleitet, wobei die Zellen in der Portsteuerung 2 bis 5 verbleiben und zu einem späteren Zeitpunkt vermittelt werden.

Innerhalb der Vermittlungssteuerung 7 speichert der Kennzeichnungs-Analysator 12 die Routekennzeichnungen um sie zu einem späteren Zeitpunkt bei der Ausführung iterativer Vermittlungsschritte zu verwenden und ersetzt die Ziel-Ausgangsnummern durch ein Eingangsnummern, so dass der Ursprungseingang der Anfragen zurück verfolgt werden kann.

Die folgenden Vermittlungsschritte werden iterativ wiederholt.
- Die in den zuvor ausgeführten iterativen Vermittlungsschritten abgearbeiteten Anfragen, d.h. die bereits erteilten Verknüpfungen zwischen den Eingängen und den Ausgängen der Paketvermittlungseinrichtung, werden von dem Kennzeichnungs-Analysator 12 gespeichert. Der veränderte Teil der Routekennzeichnung für alle nicht vermittelten Eingänge wird zu dem zuständigen Ausgangszuteiler 13 weitergeleitet.
- Für jeden Ausgangsport ist ein einzelner Ausgangszuteiler 13 zuständig, der alle vom Kennzeichnungs-Analysator 12 kommenden Anfragen bearbeitet. Aufgrund der Gewichtung der Routekennzeichnung entscheidet der Ausgangszuteiler 13 welche der Anfragen akzeptiert wird. Die ausgewählte Routekennzeichnung wird zum Kennzeichnungserteilungs-Analysator 15 weitergeleitet.
- Der Kennzeichnungserteilungs-Analysator 15 ersetzt die Eingangsnummer durch die Ziel-Ausgangsnummer und übergibt die veränderte Routekennzeichnung dem zuständigen Eingangszuteiler 16.
- Für jeden Eingangsport ist ein einzelner Eingangszuteiler 16 zuständig, der alle vom Kennzeichnungs-Analysator 15 kommenden Zuordnung bearbeitet. Aufgrund der Gewichtung der Routekennzeichnung entscheidet der Eingangszuteiler 16 welche der Zuordnungen akzeptiert wird. Die gewählte Zuordnung wird einem Ergebnis-Analysator 17, der Konfigurationseinheit 14 und der anfragenden Portsteuerung 2 bis 5 mitgeteilt. Der Ergebnis-Analysator 17 informiert den Kennzeichnungs-Analysator 12 über die akzeptierten Zuordnungen.

In die Konfigurationseinheit 14 werden die erteilten Routekennzeichnungen des Ergebnis-Analysators 17 zusammen getragen, bevor die Konfigurationseinheit 14 sie zu den Konfigurationsregistern der Koppelmatrix 6 verschickt. Im nächsten Schritt wird die Vermittlungssteuerung 7 entsprechend neu konfiguriert, um die Zellen zu übertragen. Nachdem die anfragende Portsteuerung 2 bis 5 die veränderte Routekennzeichnung erhalten hat, werden zu diesem Zeitpunkt erst die Zellen an die Koppelmatrix 6 verschickt und anschließend aus der Warteschlange entfernt.

Fig. 6 beschreibt die iterativen Vermittlungsschritte der zu einer Kaskade geschalteten Vermittlungssteuerungen 7 und Koppelmatrizen 6.

Die Portsteuerung 2 bis 5 generiert die Routekennzeichnung, welche alle Ziel-Ausgangnummern der Paketvermittlungseinrichtung mehrere Anfragen und ihre Gewichtungen enthält.

Diese Routekennzeichnung wird weiter an die Vermittlungsteuerung 7 geleitet, wobei die Zellen in der Portsteuerung 2 bis 5 verbleiben und zu einem späteren Zeitpunkt vermittelt werden.

Innerhalb der Vermittlungssteuerung 7 speichert der Kennzeichnungs-Analysator 12 das durch einen Refresh 21 aufgefrischten Signale der Routekennzeichnungen um sie zu einem späteren Zeitpunkt bei der Ausführung iterativer Vermittlungsschritte zu verwenden und ersetzt die Ziel-Ausgangsnummern durch ein Eingangsnummern, so dass der Ursprungseingang der Anfragen zurück verfolgt werden kann. Gleichzeitig werden die aufgefrischten Signale zu einer nächster mit ihr verbundene Vermittlungssteuerung 7 weitergeführt.

Die folgenden Vermittlungsschritte werden iterativ wiederholt.
- Die in den zuvor ausgeführten iterativen Vermittlungsschritten abgearbeiteten Anfragen, d.h. die bereits erteilten Verknüpfungen zwischen den Eingängen und den Ausgängen der Paketvermittlungseinrichtung, werden von dem Kennzeichnungs-Analysator 12 gespeichert. Der veränderte Teil der Routekennzeichnung für alle nicht vermittelten Eingänge wird zu dem zuständigen Ausgangszuteiler 13 weitergeleitet.
- Für jeden Ausgangsport ist ein einzelner Ausgangszuteiler 13 zuständig, der alle vom Kennzeichnungs-Analysator 12 kommenden Anfragen bearbeitet. Aufgrund der Gewichtung der Routekennzeichnung entscheidet der Ausgangszuteiler 13 welche der Anfragen akzeptiert wird. Die ausgewählte Routekennzeichnung wird zu einem Anfrage-Kaskadierer 18 weitergeleitet.
- Der Anfrage-Kaskadierer 18 vergleicht das Ergebnis der vorhergehenden Vermittlungssteuerung mit dem lokal von dem Ausgangszuteiler 13 kommenden Ergebnis. Aufgrund der Gewichtung der Routekennzeichnung entscheidet der Anfrage-Kaskadierer 18, welche Teile der beiden Ergebnisse an die nachfolgende Vermittlungssteuerung 7 weitergeleitet werden. Am Ausgang der letzten Vermittlungssteuerung 7 wird das Signal zu einer Vermittlungssteuerung 7 zurückgeführt.
- Innerhalb der Vermittlungssteuerung 7 wird das durch einen Refresh 23 aufgefrischte Signal des Ergebnisses zum Kennzeichnungserteilungs-Analysator 15 geführt und gleichzeitig zu einer nächsten mit ihr verbundenen Vermittlungssteuerung 7 zurückgeführt.
- Der Kennzeichnungserteilungs-Analysator 15 ersetzt die Eingangsnummer durch die Ziel-Ausgangsnummer und übergibt die veränderte Routekennzeichnung dem zuständigen Eingangszuteiler 16.
- Für jeden Eingangsport ist ein einzelner Eingangszuteiler 16 zuständig, der alle vom Kennzeichnungs-Analysator 15 kommenden Zuordnung bearbeitet. Aufgrund der Gewichtung der Routekennzeichnung entscheidet der Eingangszuteiler 16 welche der Zuordnungen akzeptiert wird. Die gewählte Zuordnung wird einem Erteilungs-Kaskadierer 19 zugeführt.
- Der Erteilungs-Kaskadierer 19 vergleicht das Ergebnis der vorhergehenden Vermittlungssteuerung 7 mit dem lokal vom Eingangszuteiler 16 erzielten Ergebnis (akzeptierte Zuordnung). Aufgrund der Gewichtung der Routekennzeichnung entscheidet der Erteilungs-Kaskadierer 19 für jeden Eingangsport, welche Teile der beiden Ergebnisse an die nachfolgende Vermittlungssteuerung 7 weitergeleitet werden. Am Ausgang der letzten Vermittlungsteuerung 7 wird das Ergebnis der anfragenden Portsteuerung 2 bis 5 mitgeteilt.
- Die Portsteuerung 2 bis 5 schickt das durch einen Refresh 22 aufgefrischte Signal des resultierenden Ergebnisses zum Ergebnisanalysator 17 der Vermittlungssteuerung 7 oder das Ergebnis wird direkt vom Ausgang der letzten Vermittlungssteuerung 7 durch einen Refresh 22 zum Ergebnisanalysator 17 weitergeleitet.
- Der Ergebnis-Analysator 17 informiert den Kennzeichnungs-Analysator 12 über die akzeptierten Zuordnungen (Ergebnis).

In die Konfigurationseinheit 14 werden die erteilten Routekennzeichnungen des Ergebnis-Analysators 17 zusammen getragen, bevor die Konfigurationseinheit 14 sie zu den Konfigurationsregistern der Koppelmatrix 6 verschickt. Zwischen der aktuellen und nächsten Zell-Periode wird die Koppelmatrix 6 entsprechend neu konfiguriert, um die Zellen in der nächsten Zell-Periode zu übertragen. Nachdem die anfragende Portsteuerung 2 bis 5 die veränderte Routekennzeichnung erhalten hat, werden die Zellen in der nächsten Zell-Periode an die Koppelmatrix 6 verschickt und anschließend aus der Warteschlange entfernt.

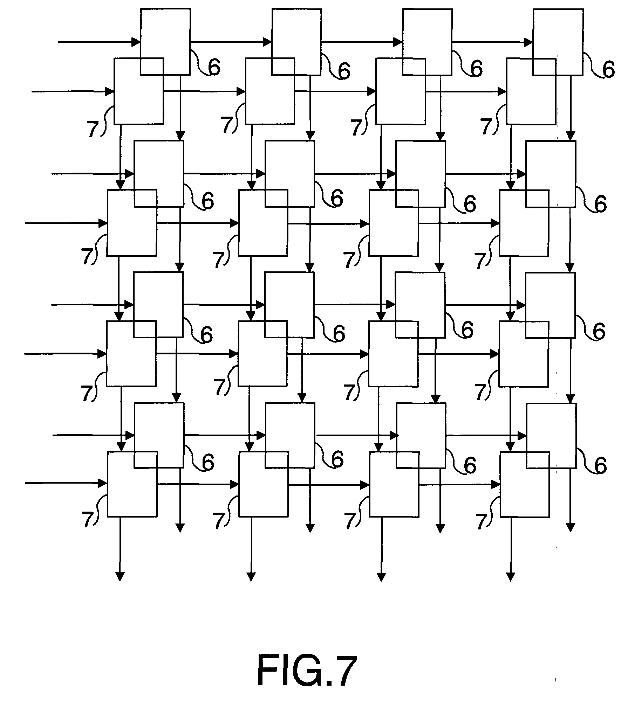

Fig. 7 zeigt die zu einer Kaskade verbundenen Vermittlungssteuerungen 7 und Koppelmatrizen 6. An den zu der Kaskade der Vermittlungssteuerungen 7 führenden Eingänge liegen die aus den Portsteuerungen (2 bis 5) verschickte Routekennzeichnungen. Die Ergebnisse der untersten in einer Reihe liegenden Vermittlungssteuerungen 7 sind die resultierenden Vermittlungen. Falls die Vermittlungssteuerungen zu unterschiedlichen Ergebnissen für einen Eingangsport kommen, werden die Ergebnisse wieder an die Eingänge der Vermittlungssteuerungen zurückgeführt. Auf die Rückführung der Ergebnisse wird hier nicht näher eingegangen.

## Patentansprüche

1. Paketvermittlungseinrichtung mit einem Koppelfeld bestehend aus mehreren pufferlosen Koppelmatrizen (6) und mehreren zu einer Kaskade geschalteten, jeweils einer Koppelmatrix (6) zugeordneten Vermittlungssteuerungen (7), die jeweils mindestens
- einen Kennzeichnungs-Analysator (12) zur Kennzeichnung des Eingangsports in einer einen Paket zugeordneter Routekennzeichnung,
- einen Ausgangszuteiler (13) zur Auswertung der Routekennzeichnung,
- einer Konfigurationseinheit (14) zur Speicherung von akzeptierten Zuordnungen jeweils eines Eingangsports mit einem Ausgangsport,
- einem Kennzeichnungserteilungs-Analysator (15) zur Veränderung und Weiterleitung der Routekennzeichnung an eine Portsteuerung (2 bis 5),
enthalten.

2. Paketvermittlungseinrichtung nach Anspruch 1
**dadurch gekennzeichnet,**
**dass** die Vermittlungssteuerung (7) mehrere Eingangszuteiler (16) zur Auswertung mehrerer gleichzeitig mit der Routekennzeichnung verschickter Anfragen enthält.

3. Paketvermittlungseinrichtung nach Anspruch 2
**dadurch gekennzeichnet,**
**dass** die Vermittlungssteuerung (7) mindestens einen Ergebnisanalysator (17) zur Information des Kennzeichnungs-Analysators (12) über akzeptierte Zuordnungen mehrerer gleichzeitig mit der Routekennzeichnung verschickter und durch die Vermittlungssteuerung (7) iterativ bearbeiteter Anfragen.

4. Paketvermittlungseinrichtung nach Anspruch 3
**dadurch gekennzeichnet,**
**dass** jede Vermittlungssteuerung (7) einen Anfrage-Kaskadierer (18) zum Vergleich und zur Auswahl eines lokal durch den Ausgangszuteiler (13) ermittelten Ergebnisses und eines von der vorhergehenden Vermittlungssteuerung (7) erzielten Ergebnisses enthält.

5. Paketvermittlungseinrichtung nach Anspruch 4
**dadurch gekennzeichnet,**
**dass** jede Vermittlungssteuerung (7) einen Erteilungs-Kaskadierer (19) zum Vergleich und zur Auswahl eines lokal durch den Eingangszuteiler (16) ermittelten Ergebnisses und eines von der vorhergehenden Vermittlungssteuerung (7) erzielten Ergebnisses enthält.

6. Paketvermittlungseinrichtung nach Anspruch 1
**dadurch gekennzeichnet,**
**dass** das Koppelfeld über gemultiplexte Signalisierungs- und Nutzdaten-Verbindungen mit mehreren Eingangsports verbunden ist.
